Europäisches Patentamt

(19) European Patent Office

Office européen des brevets

(11) Publication number: **0 065 862**
**A1**

(12) # EUROPEAN PATENT APPLICATION

(21) Application number: **82302485.6**

(22) Date of filing: **17.05.82**

(51) Int. Cl.³: **G 06 F 15/44**

(30) Priority: **19.05.81 GB 8115328**

(43) Date of publication of application:
**01.12.82 Bulletin 82/48**

(84) Designated Contracting States:
**AT BE CH DE FR GB IT LI LU NL SE**

(71) Applicant: **VIDEO COMPUTER SYSTEMS LTD**
**3/5 Princes Gardens Larne**
**County Antrim Northern Ireland(GB)**

(72) Inventor: **Devaney, Damian Gerard Conleath**
**5 Ballymote Walk Downpatrick**
**County Down Northern Ireland(GB)**

(74) Representative: **Wotherspoon, Graham et al,**
**FITZPATRICKS 48 St. Vincent Street**
**Glasgow G2 5TT(GB)**

(54) **Simulation apparatus.**

(57) Apparatus for simulating a race, particularly a horse race, on a video display 10 stores data relating to simulated runners in a memory 36. A computing circuit 36 acts on the stored data in accordance with random numbers from a random number generator 38 to adjust their horizontal position on the display 10. The display background is scrolled by a circuit 27 to simulate movement.

The apparatus includes means for generating betting odds from numerical factors stored at 18 for all runners, in dependence on the particular runners selected at random at 20 for a given race.

./...

EP 0 065 862 A1

Croydon Printing Company Ltd.

Fig. 1

- 1 -

"Simulation Apparatus"

DESCRIPTION

This invention relates to an apparatus for simulating a race, particularly but not exclusively a horse race.

An object of the invention is to provide an apparatus which gives a video simulation of a race with a result which is unpredictable but not random. For example, the race may be a horse race in which pre-assigned measures of speed, staying power, jumping ability and preferred ground conditions for each horse are combined with a random element to give a simulated race comparable with a real race.

The invention accordingly provides simulation apparatus comprising:

a video display unit (v.d.u.);

means for generating a background picture on the v.d.u. and for scrolling the background across the v.d.u.;

means for generating representations of a number of runners on the v.d.u.;

random number generating means;

a memory containing predetermined characteristics for each runner;

speed determining means for producing a speed signal for each runner in dependence on said characteristics and the output of the random number generating means; and

position adjustment means for altering the relevant position of each runner along the direction of scrolling movement in response to said speed signals.

From another aspect, the invention provides a method of simulating a race between a plurality of runners on a video display, the method comprising:

generating video signals representing a background;

generating video signals representing said runners;

initially displaying the runners at fixed positions on the screen;

scrolling the background across the screen to simulate movement of the runners;

generating a sequence of random or pseudo-random numbers;

generating, a speed signal for each runner at predetermined points in the race which speed signal is a function of the next number of said sequence; and

moving the position of each runner forward or back on the display in accordance with said speed signals.

Embodiments of the invention will now be described, by way of example, with reference to the accompanying drawings, in which:

Fig. 1 is a schematic block diagram of an apparatus embodying the invention;

Fig. 2 is a main program flowchart of an alternative embodiment using a microprocessor; and

Figs. 3 to 11 are more detailed flowcharts of parts of the system of Fig. 2.

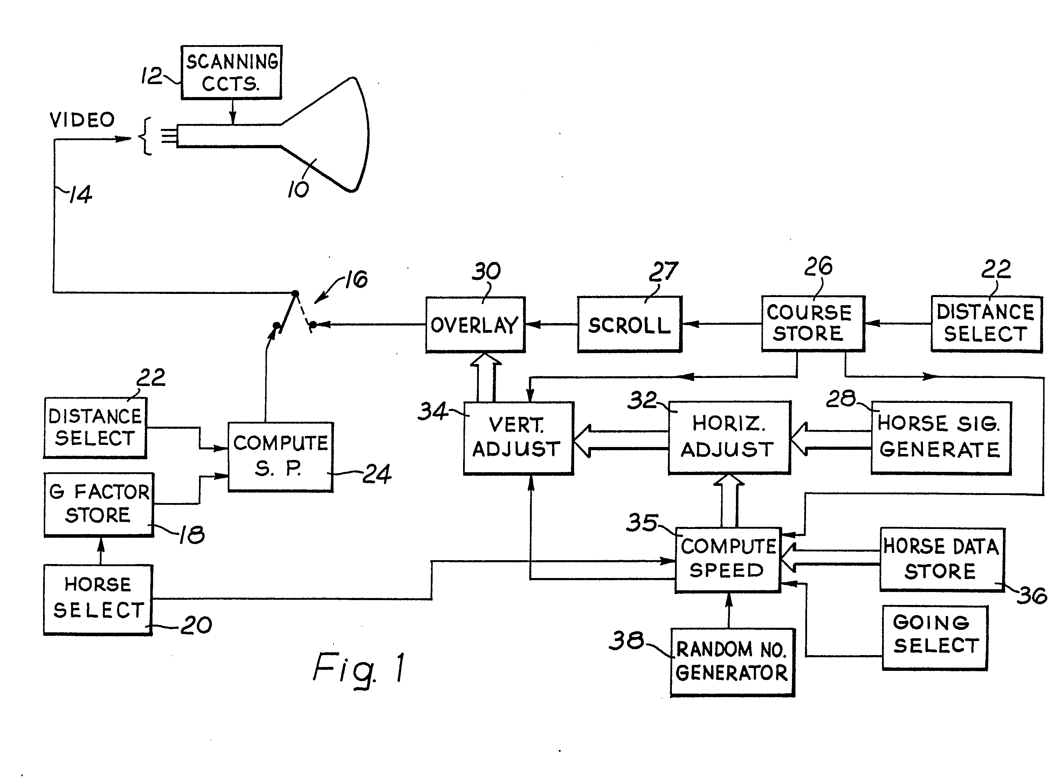

The apparatus of Fig. 1 simulates a horse race over jumps, and provides facilities for starting price (S.P.) betting. The apparatus can simulate races of 2, 2½ or 3 miles in length run by 8 horses selected from 100 horses each having predetermined characteristics. The characteristics of the selected horses are analysed and S.P. odds are computed from this.

Referring to the drawing, the apparatus includes a standard t.v. monitor including tri-colour tube 10 and scanning circuits 12. A video signal is supplied at 14 to form the picture. In an initial phase, the display consists of a list of runners and their S.P. odds, and subsequently the simulated race is displayed, as schematically indicated by changeover switch 16.

A memory 18 stores a "G factor" for each horse and each distance, the G factor being a fraction which defines the performance of that horse at that distance. The distance to be run and the eight horses to run are selected at 20 and 22, either cyclically or at random. A computation circuit 24 then computes the S.P. odds for each horse according to the formula:

$$S.P. = \frac{TG - 25\% - G}{G}$$

where TG is the total of the eight G factors, and G is the G factor for that horse. This produces such odds that, on average, the "bookmaker" (which may be a coin mechanism associated with the apparatus) will profit by 25% of the total stake money.

During the race, the display is of eight horses spaced vertically. The background scrolls left to right to give an illusion of movement. At the start of the race, all eight horses are aligned in the centre of the screen. As the race progresses, speed calculations are performed for each horse, as will be described, and the horizontal positions of the horses on the screen are adjusted accordingly, faster horses being moved to the left and slower horses to the right.

Thus, picture information defining the course is stored at 26, the starting point of the display being determined by the distance selected at 22, and the course display is scrolled left to right by circuit 27. Picture signals defining the eight horses are generated by a circuit 28 (this may include means not shown for causing the horses' legs to appear to move, and for assigning colours to the riders), and the display elements defined by these signals are overlaid at 30 on the course display after being adjusted for horizontal and vertical position in the raster by circuits 32 and 34 respectively.

The horizontal adjustement circuit 32 operates in response to a speed computing circuit 35. A memory 36 stores, for each horse, a going preference (good, firm or soft), and a plurality of speed change points. The speed change points are pre-defined distances along the "course" at which that horse's speed may change, and are chosen in a manner to minimise the chance of all horses in a race changing speed at the same time.

When a horse reaches a speed change point, the speed computing circuit 35 reads the output at that time of a random number generator 38 and uses this to compute a new speed. For example, the random number generator 38 may generate the numbers 1-48, and the response of the speed computing circuit 35 may be arranged to give:

| Random No. | Speed |
|------------|-------|
| 1 | 9 |
| 2 - 12 | 10 |
| 13 - 46 | 11 |
| 47 - 48 | 12 |

These proportions may readily be altered in the light of experience, the object being to obtain randomness while avoiding undue differences in the speeds of the horses. The speed obtained may then be further adjusted in dependence on the going and the horse's going preference; for example, for a horse with a going preference of "firm" the speed may be increased by 1 if the going is "firm", unaltered if "good", and reduced by 1 if "soft".

The vertical adjustment circuit is provided to cause the horses to appear to rise over the jumps. The location of each jump is derived from the course store 26 and used to move each horse up and down at the appropriate time. It is also possible (not shown) to arrange that particular combinations of speed, distance and random number will cause a horse to "fall", i.e. fail to rise at the fence and move to right out of picture with the fence.

Although described above in terms of discrete circuits, the apparatus may be realised in the form of a microprocessor which provides the equivalent of the memories, computation circuits, and random number generators. Suitable microprocessors are Texas Instruments TI 9900 or TI 9955. The microprocessor may operate in

- 5 -

conjunction with a specialised video display processor such as the Texas Instruments TMS 9918, which can generate many of the details of the display in a convenient manner.

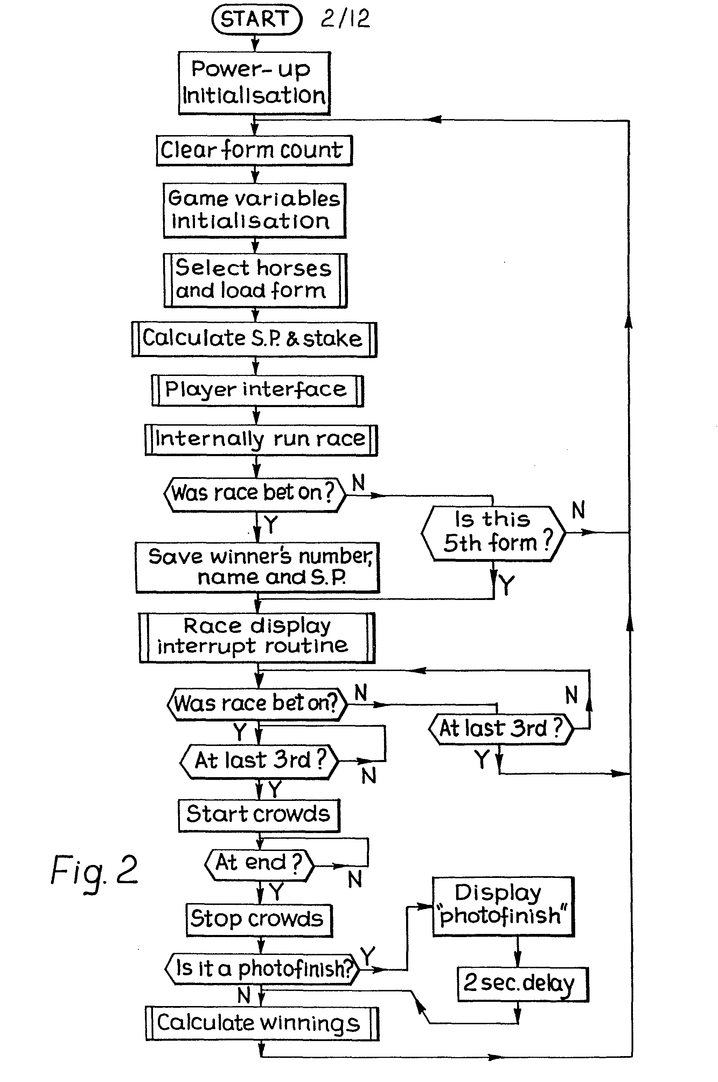

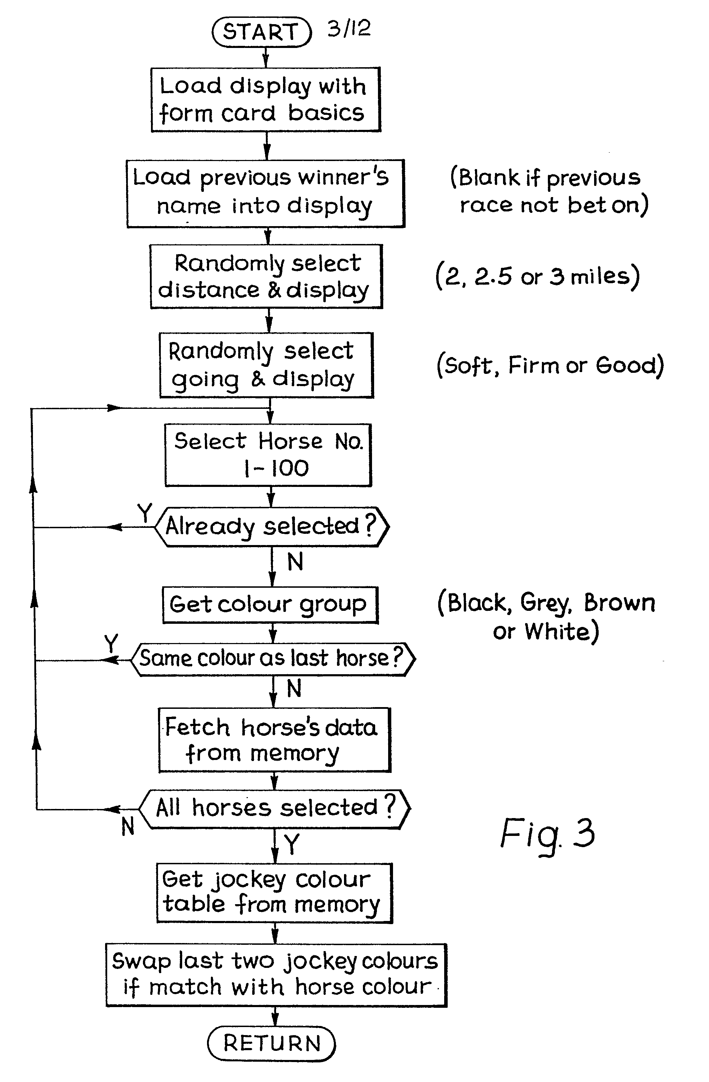

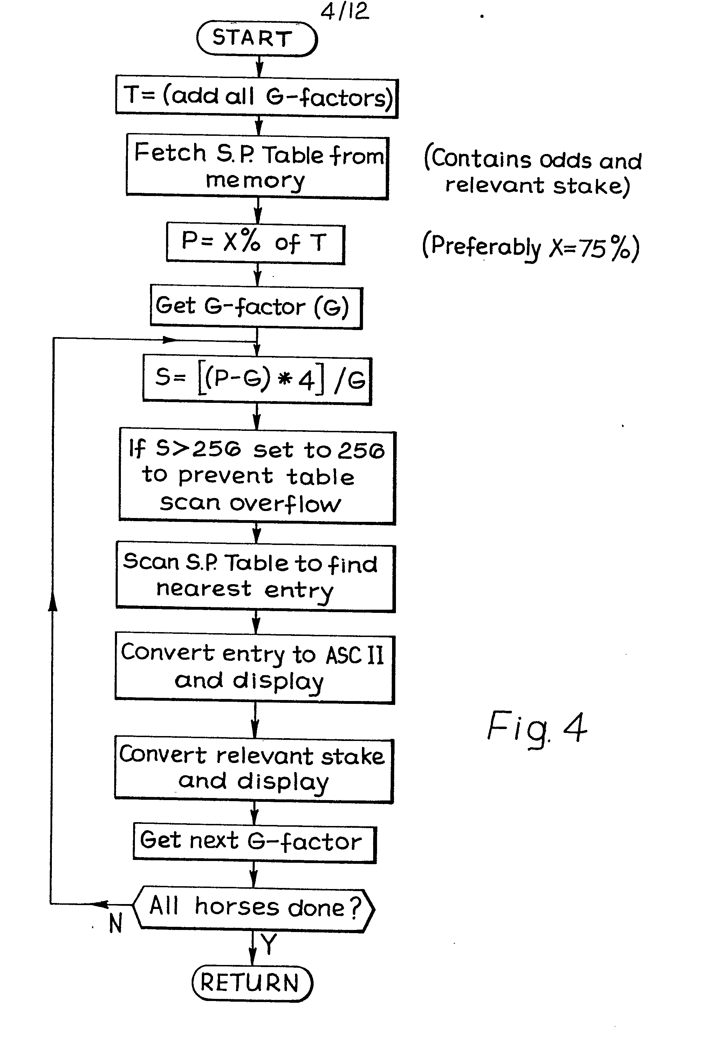

Such a computerised embodiment may be controlled as illustrated in Figs. 2 et seq. Referring to Fig. 2, an overall program flowchart is shown. Power-up initialisation is conventional, on switching on mains power. The routine "Select horses & load form" (Fig. 3) chooses at random eight horses from 100 and loads form characteristics for these eight from predetermined characteristics stored in ROM. "Calculate S.P. and stakes " (Fig. 4) calculates starting prices for the selected horses, and "Player interface" allows bets to be placed.

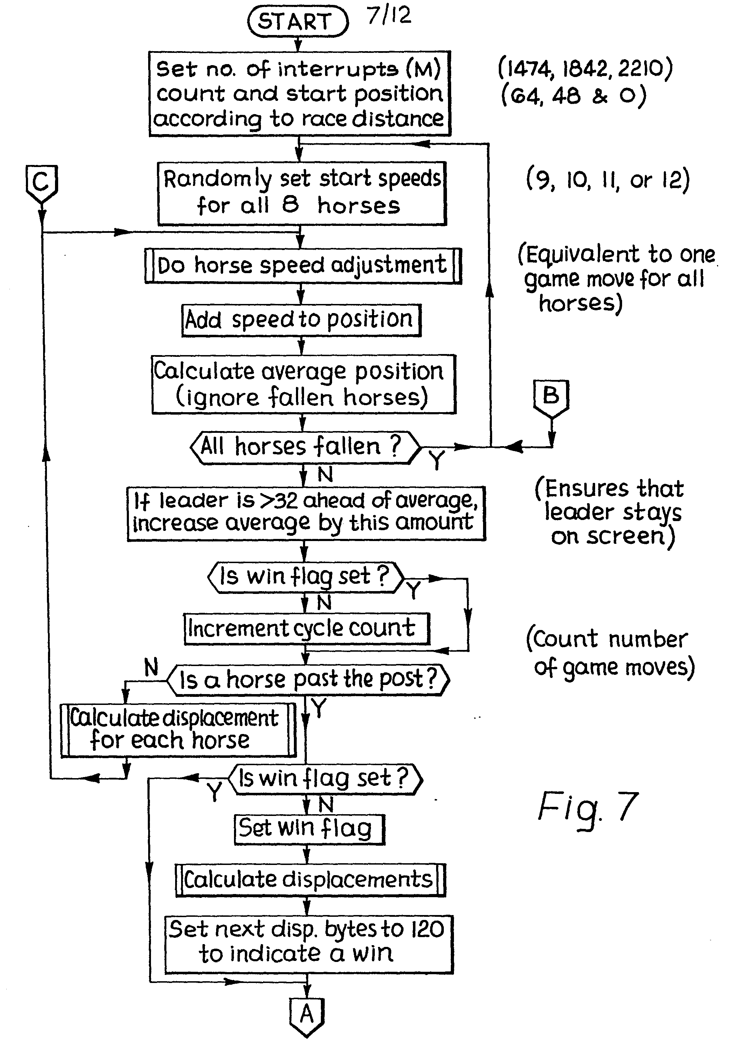

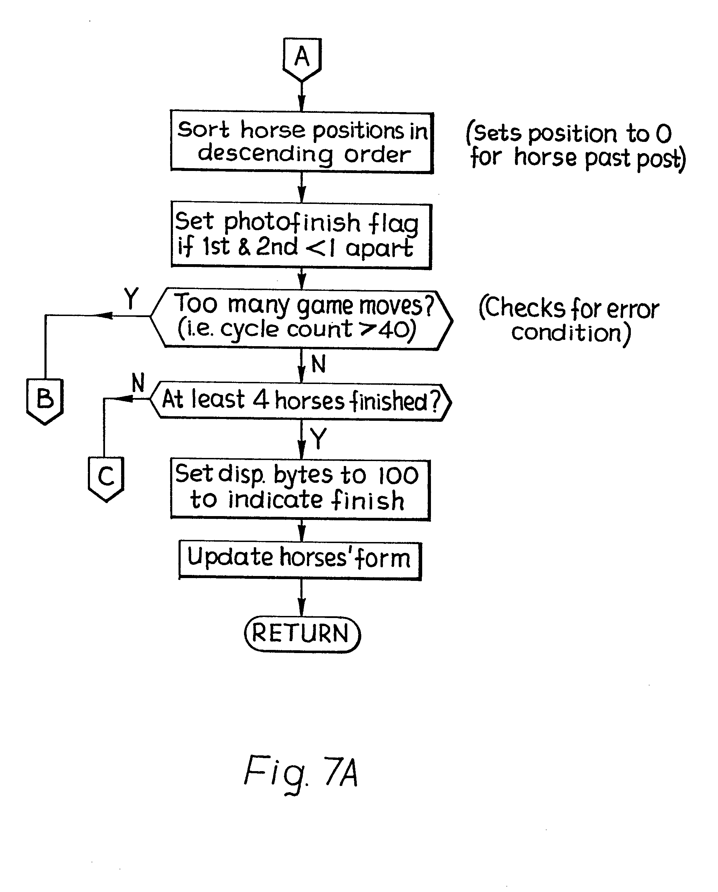

In this embodiment, the simulated race is "run" in the microprocessor at high speed to produce video data for subsequent display at viewer speed. "Internally run race" (Fig. 7) thus generates a complete race sequence of video control signals. If no bets were placed, only every fifth race is displayed (as an attraction to potential customers), and the last 1/3 of that race is not displayed.

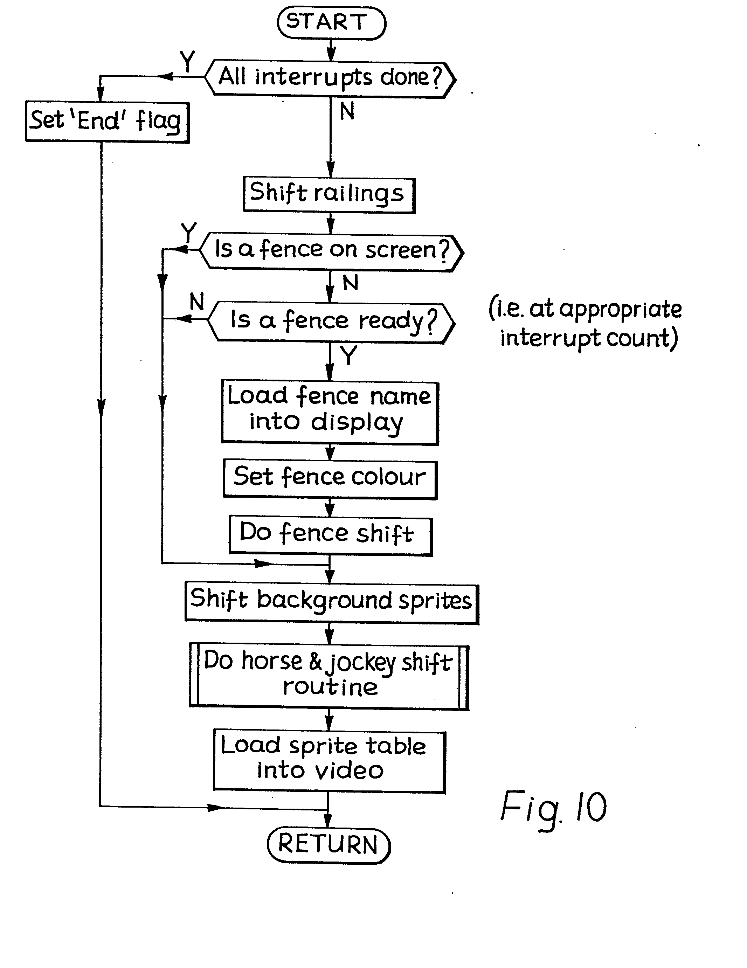

Details of the winner are stored for possible combination bets, and "Race display interrupt routine" (Fig. 10) is run to produce the video display. Synthetic spectator crowd noise is generated during the last 1/3 of the displayed race. A photofinish facility is provided where two horses finish closely adjacent, by re-displaying the final position as a still picture after a 2-second delay. Finally, winnings are calculated from starting prices and stakes.

The "Horse selection routine" will be largely self-evident from Fig. 3. The form card basics are headings for a tabular display of runners, e.g. name, S.P. odds and previous form. Characteristics of each horse (name, G-factor, pick-up points and going preference) are permanently stored in memory, suitably in EPROM. "Pick-up points" are the points at which speed changes are calculated for a particular horse.

Fig. 4 shows the routine for calculating S.P. odds and stakes. X% is the percentage of stake money which, on average, it is desired to pay out. A number S is calculated in the range 1-256, which is converted to traditional starting price odds (e.g. 9-2, 33-1) via a look-up table.

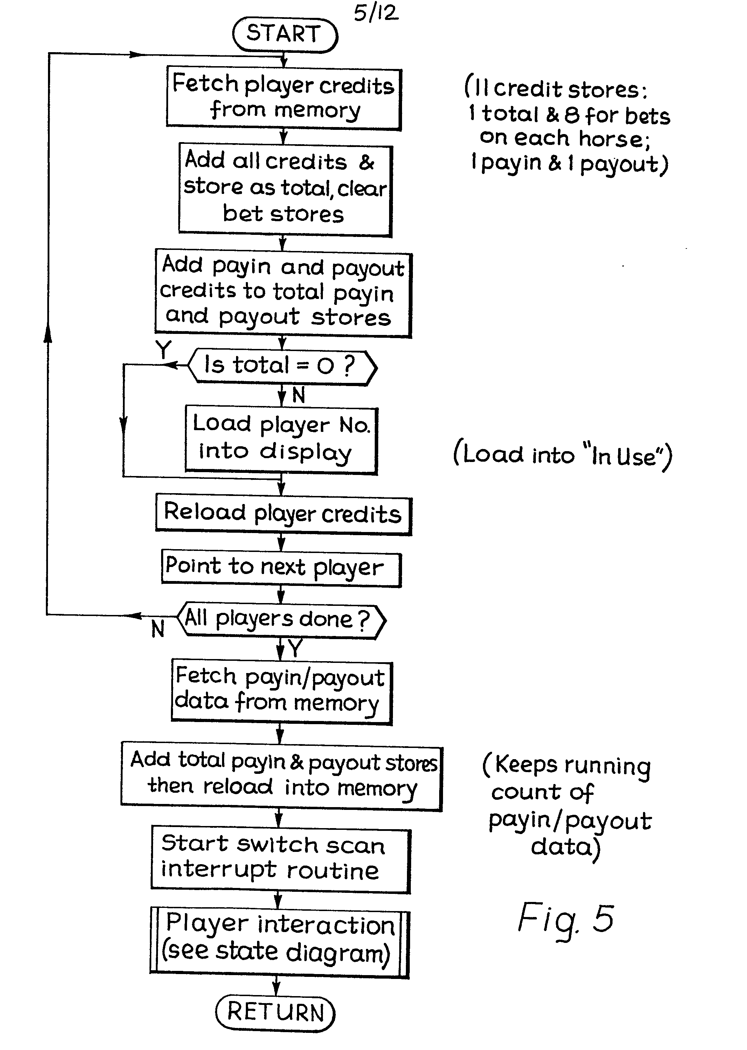

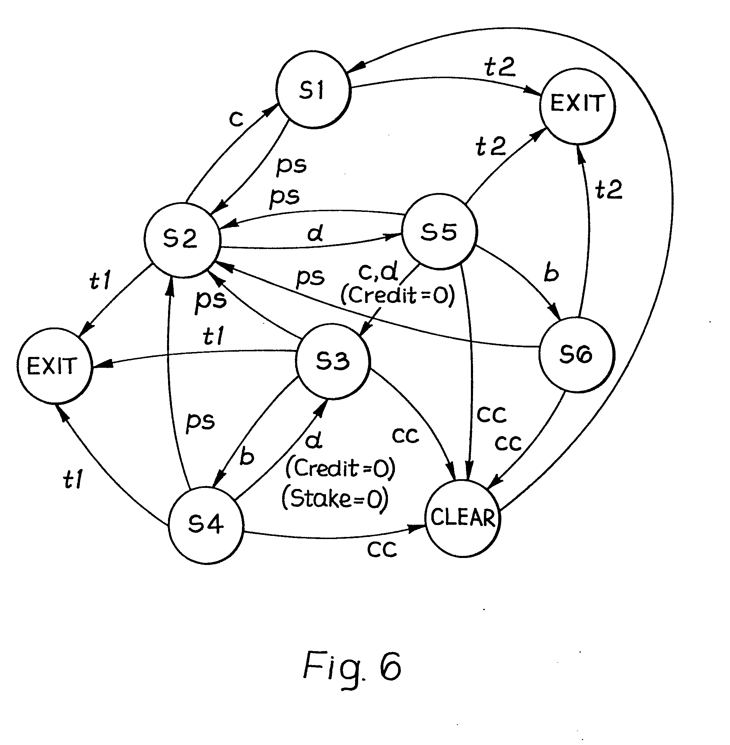

The player interface routine of Fig. 5 allows bets to be placed via input keys. A "player select" key can be pressed to allow a player to identify himself as number 1-8; thereafter that player can place bets on horses 1-8. Credits can be entered by a conventional coin acceptor. The input keys are scanned in known manner during player interaction as illustrated in Fig. 6. The states of Fig. 6 are:

S1: State 1. Wait for Player Select keypress only, ignore all other inputs. Display 'SELECT PLAYER'.

S2: State 2. Wait for digit input (player no. 1-8), ignore all other inputs. Clear message prompts.

S3. State 3. Wait for any input from selected player. Display selected player credits & no. A digit (1-8) keypress will place 1 credit on the selected horse and decrement displayed credits (ignored if credits are zero). Coin inputs will cause credits displayed to be incremented accordingly. A 'Bet all" keypress will cause transition to State 4. Clear message prompts.

S4. State 4. Wait for digit input (horse no. 1-8). This will cause that player's credits to be bet on the selected horse until his credits = 0 or the state = 0 for that horse (whichever occurs first).

S5: State 5. Wait for a 'Bet All' keypress only. This state is entered to check if a double is possible (i.e. won on last race), (if not revert to State 3). Any input other than 'Bet All' will cause a transition back to State 3 (i.e. disqualify double). Display 'DOUBLE AVAILABLE'.

S6: State 6. Wait for digit input (horse no. 1-8). This state is only entered if a double is possible (from State 5). Any other input will disqualify the double and cause a transition to State 3. That player's credits are bet on the selected horse until credits = 0 or the bet could pay back more than the maximum bonus payout.

CLEAR. This state clears that player's unbet credits and causes a transition back to State 1.

A player cannot then be reselected.

The transitions of Fig. 6 are:

t1,t2       10 & 20 second timeouts respectively
d       Digit (1-8) keypress
b       Bet All keypress
ps       Player Select keypress
c       Coin Input
cc       Clear Credits switch activation.

A "Bet All" key enables a player who has won on one race to effect a "double" bet by betting his winnings on one horse in the subsequent race.

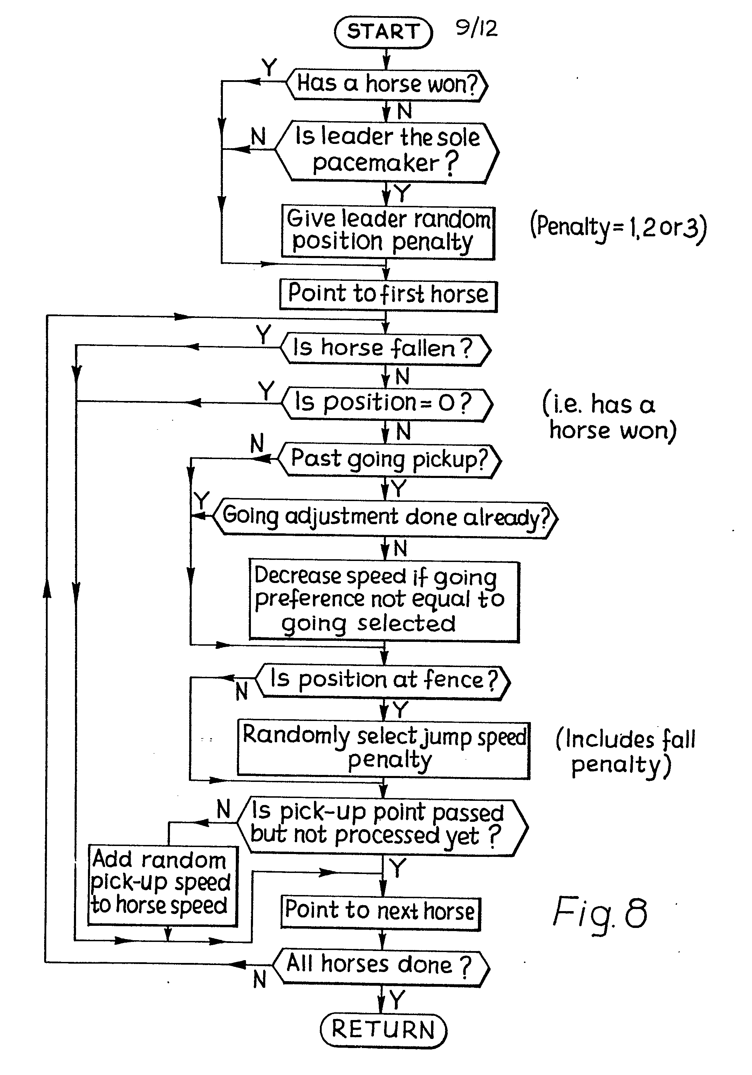

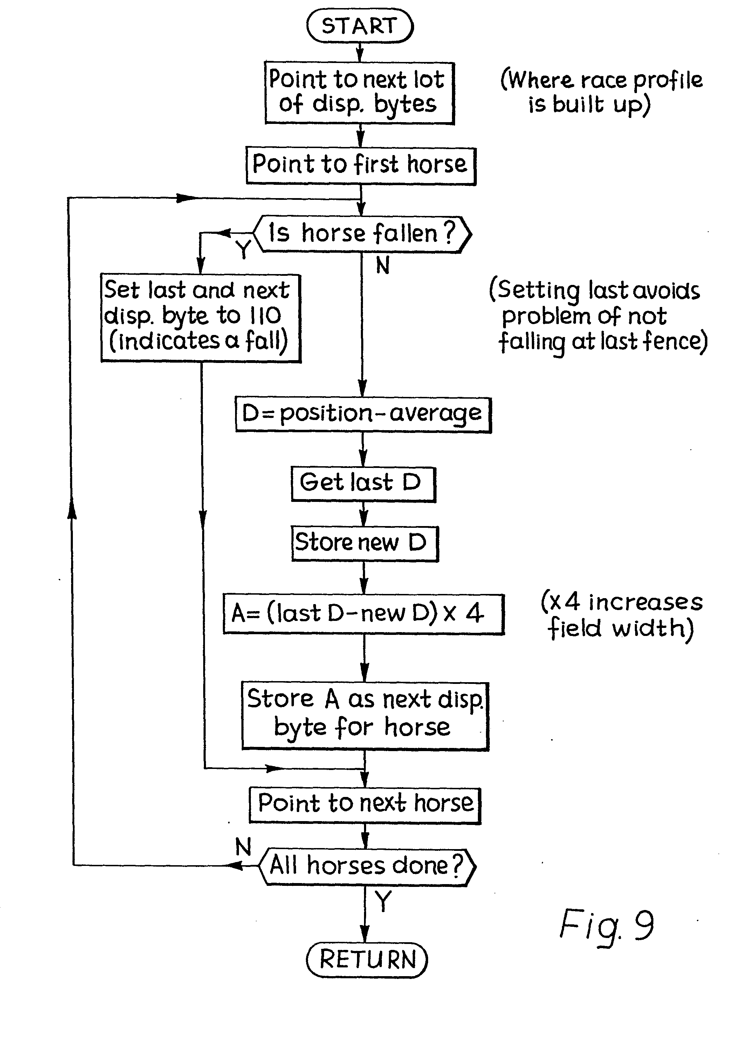

The run race routine of Figs. 7 and 7a produces and loads to memory control signals which are used to control the video processor. The average position controls the scrolling of the background, and the displacement for each horse sets its variation from the average at any given cycle count in the race. On each cycle, the speed of each horse is considered by the horse speed adjustment routine of Fig. 8, but the individual speed will be adjusted only if that horse is at a pick-up point or a fence. The "calculate displacement" routine is shown in detail in Fig. 9.

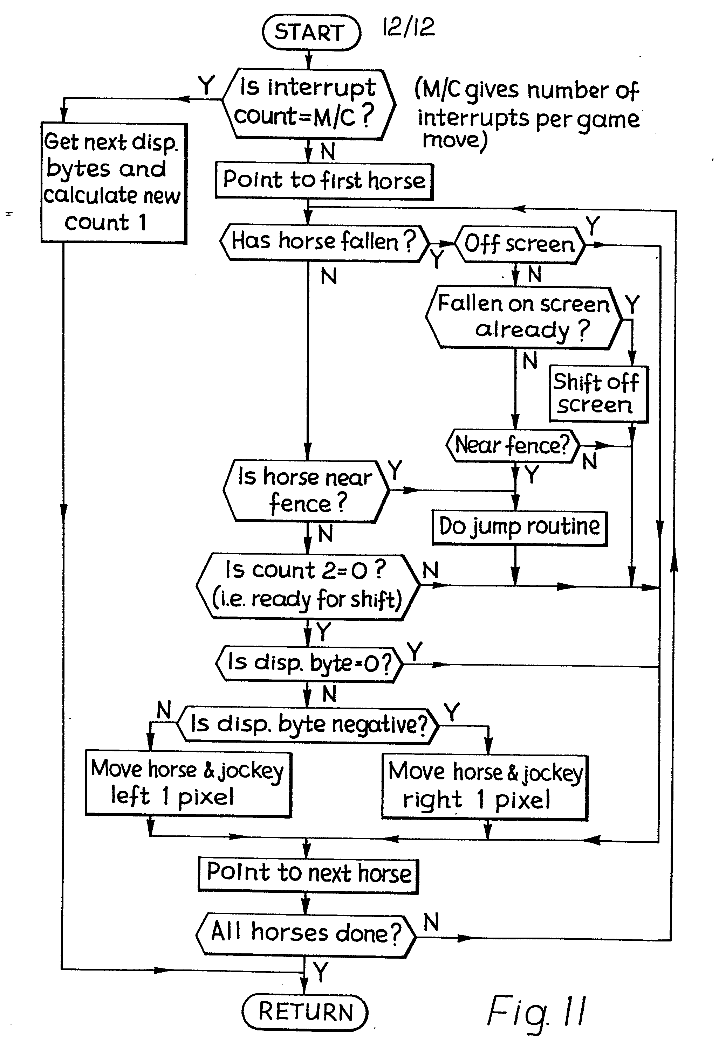

The actual display of the race is controlled by the race display interrupt routine of Figs. 10 and 11. With the video processor mentioned above, each feature of the composite display (e.g. a horse or a fence) is defined as a "sprite" whose form and screen position are separately defined, and which can be moved on the display by sprite shift signals.

There has thus been described an apparatus which simulates a horse race or other race. The result of the race is not predictable but is influenced by characteristics predetermined for the individual runners. Thus a skillful player is more likely to predict the outcome than a player operating simply at random. This result is achieved by controlling the relative positions of the runners by a combination of the predetermined characteristics and random numbers. Another feature is that, because of this combination, no two races will ever be the same and it is thus not possible to predict the result of a race by recording the results of previous races.

CLAIMS

1. Simulation apparatus comprising:

a video display unit (v.d.u.);

means for generating a background picture on the v.d.u. and for scrolling the background across the v.d.u.;

means for generating representations of a number of runners on the v.d.u.;

random number generating means;

a memory containing predetermined characteristics for each runner;

speed determining means for producing a speed signal for each runner in dependence on said characteristics and the output of the random number generating means; and

position adjustment means for altering the relevant position of each runner along the direction of scrolling movement in response to said speed signals.

2. The apparatus of claim 1, in which the background picture generating means is operative to provide a background picture including obstacles to be jumped, and including vertical position adjusting means for altering the vertical position of a runner as it traverses an obstacle.

3. The apparatus of claim 2, in which the vertical position adjusting means and the position adjusting means are responsive to the random number generating means to cause a runner to "fall" at an obstacle.

4. The apparatus of any preceding claim, including means for computing betting odds, said means comprising:

runner select means for selecting at random a given number of runners from a greater number whose characteristics are stored in the memory,

a store for storing a numerical factor for each runner which is a function of that runner's characteristics, and

computing means connected to the runner select means and the store to compute odds for each selected runner in dependence on said factors according to a predetermined formula.

5. The apparatus of claim 4, in which said formula is:

$$S.P. = \frac{TG - x\% - G}{G}$$

where S.P. is the starting price odds for a given number

TG is the total of said factors

G is said factor for the given runner, and

x is the desired profit to the apparatus.

6. The apparatus of any preceding claim, in which the memorised characteristics for each runner include speed change points at predetermined locations on the background, and in which the speed determining means calculates a new speed signal for a runner at each of said locations.

7. The apparatus of claim 6, in which the speed determining means computes a relatively small number of possible speed signals from a relatively large number of random numbers, the relationship between these being weighted towards an average speed to avoid undue speed differences.

8. The apparatus of any preceding claim, in which the random number generating means, the speed determining means, and the position adjustment means are comprised by a microprocessor; and the background picture generating means and representation generating means is comprised by a video display processor.

9. A method of simulating a race between a plurality of runners on a video display, the method comprising:

generating video signals representing a background;

generating video signals representing said runners;

initially displaying the runners at fixed positions on the screen;

scrolling the background across the screen to simulate movement of the runners;

generating a sequence of random or pseudo-random numbers;

generating, a speed signal for each runner at predetermined points in the race, which speed signal is a function of the next number of said sequence; and

moving the position of each runner forward or back on the display in accordance with said speed signals.

Fig. 1

START 2/12

Power-up Initialisation

Clear form count

Game variables Initialisation

Select horses and load form

Calculate S.P. & stake

Player interface

Internally run race

Was race bet on? — N

Is this 5th form? — N

Y

Save winner's number, name and S.P.

Race display interrupt routine

Was race bet on? — N

At last 3rd? — N

Y

At last 3rd? — N

Y

Start crowds

At end? — N

Y

Stop crowds

Display "photofinish"

Is it a photofinish? — Y

2 sec. delay

N

Fig. 2

Calculate winnings

START  3/12

Load display with
form card basics

Load previous winner's
name into display

(Blank if previous
race not bet on)

Randomly select
distance & display

(2, 2.5 or 3 miles)

Randomly select
going & display

(Soft, Firm or Good)

Select Horse No.
1 - 100

Y — Already selected?

N

Get colour group

(Black, Grey, Brown
or White)

Y — Same colour as last horse?

N

Fetch horse's data
from memory

All horses selected?  N

Y

Get jockey colour
table from memory

Swap last two jockey colours
if match with horse colour

RETURN

*Fig. 3*

0065862

START

T = (add all G-factors)

Fetch S.P. Table from memory

(Contains odds and relevant stake)

P = X% of T

(Preferably X=75%)

Get G-factor (G)

$S = [(P-G) * 4] / G$

If S > 256 set to 256 to prevent table scan overflow

Scan S.P. Table to find nearest entry

Convert entry to ASC II and display

Convert relevant stake and display

Get next G-factor

All horses done?

N

Y

RETURN

*Fig. 4*

START

Fetch player credits
from memory

Add all credits &
store as total, clear
bet stores

Add payin and payout
credits to total payin
and payout stores

Y ← Is total = O ?

N

Load player No.
into display

Reload player credits

Point to next player

N ← All players done ?

Y

Fetch payin/payout
data from memory

Add total payin & payout stores
then reload into memory

Start switch scan
interrupt routine

Player interaction
(see state diagram)

RETURN

(11 credit stores:
1 total & 8 for bets
on each horse;
1 payin & 1 payout)

(Load into "In Use")

(Keeps running
count of
payin/payout
data)

Fig. 5

Fig. 6

START  7/12

Set no. of interrupts (M)
count and start position
according to race distance

(1474, 1842, 2210)
(64, 48 & 0)

Randomly set start speeds
for all 8 horses

(9, 10, 11, or 12)

Do horse speed adjustment

(Equivalent to one
game move for all
horses)

Add speed to position

Calculate average position
(ignore fallen horses)

B

All horses fallen ?  Y

N

If leader is >32 ahead of average,
increase average by this amount

(Ensures that
leader stays
on screen)

Is win flag set ?  Y

N

Increment cycle count

(Count number
of game moves)

N  Is a horse past the post ?

Y

Calculate displacement
for each horse

Is win flag set ?

Y  N

Set win flag

Fig. 7

Calculate displacements

Set next disp. bytes to 120
to indicate a win

A

C

0065862

```
            ┌─A─┐
               │
               ▼
     ┌──────────────────────┐
     │ Sort horse positions in│      (Sets position to 0
     │   descending order    │      for horse past post)
     └──────────────────────┘
               │
               ▼
     ┌──────────────────────┐
     │ Set photofinish flag  │
     │ if 1st & 2nd <1 apart │
     └──────────────────────┘
               │
   Y    ◇ Too many game moves? ◇      (Checks for error
  ◄─────│ (i.e. cycle count >40)│          condition)
   │           │N
   │           ▼
  ┌B┐  N  ◇ At least 4 horses finished? ◇
        ◄────│
   │         │Y
   │         ▼
  ┌C┐  ┌──────────────────────┐
       │ Set disp. bytes to 100 │
       │  to indicate finish   │
       └──────────────────────┘
               │
               ▼
       ┌──────────────────────┐
       │  Update horses' form  │
       └──────────────────────┘
               │
               ▼
           (RETURN)
```

Fig. 7A

Fig. 8

START

Point to next lot of disp. bytes — (Where race profile is built up)

Point to first horse

Is horse fallen? — Y / N

Set last and next disp. byte to 110 (indicates a fall) — (Setting last avoids problem of not falling at last fence)

D = position - average

Get last D

Store new D

A = (last D - new D) × 4 — (x4 increases field width)

Store A as next disp. byte for horse

Point to next horse

All horses done? — N / Y

RETURN

Fig. 9

0065862

START

All interrupts done? — Y

Set 'End' flag

N

Shift railings

Is a fence on screen? — Y

N

Is a fence ready? — N          (i.e. at appropriate
interrupt count)

Y

Load fence name
into display

Set fence colour

Do fence shift

Shift background sprites

Do horse & jockey shift
routine

Load sprite table
into video

RETURN

*Fig. 10*

START  12/12

Y — Is interrupt count=M/C ?   (M/C gives number of interrupts per game move)

Get next disp. bytes and calculate new count 1

N

Point to first horse

Has horse fallen ? → Off screen — Y

N          Y     N

Fallen on screen already ? — Y

N

Shift off screen

Near fence? → N

Y

Is horse near fence ? — Y

N

Do jump routine

Is count 2=0 ? (i.e. ready for shift) — N

Y

Is disp. byte=0? — Y

N

N — Is disp. byte negative? — Y

Move horse & jockey left 1 pixel

Move horse & jockey right 1 pixel

Point to next horse

All horses done? — N

Y

RETURN        Fig. 11

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 045 789 (ATARI) *Column 1, lines 10-19; column 4, lines 10-14* | 1 | G 06 F 15/44 |
| | --- | | |
| Y | US-A-4 126 851 (OKOR) *From column 5, line 52 to column 6, line 12* | 1 | |
| | --- | | |
| Y | IBM TECHNICAL DISCLOSURE BULLETIN, vol. 20, no. 5, October 1977, pages 2051-2056, New York (USA); D.F.BANTZ et al.: "Device for creating 3D video effect by parallax". *Page 2052, lines 1-9* | 1 | |
| | ----- | | |

TECHNICAL FIELDS
SEARCHED (Int. Cl. ³)

G 06 F 15/44
A 63 F 3/00
A 63 F 9/00
G 07 F 17/34
G 06 F 15/28
G 06 F 15/20

The present search report has been drawn up for all claims

| Place of search | Date of completion of the search | Examiner |
|---|---|---|
| THE HAGUE | 19-07-1982 | BURGAUD C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82